(19)

Europäisches
Patentamt
European
Patent Office
Office européen
des brevets

(11) **EP 2 083 529 A2**

(12) **EUROPEAN PATENT APPLICATION**

(43) Date of publication:
**29.07.2009 Bulletin 2009/31**

(51) Int Cl.:
***H04L 1/00*** (2006.01)

(21) Application number: **09154548.3**

(22) Date of filing: **21.10.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(62) Document number(s) of the earlier application(s) in
accordance with Art. 76 EPC:
**05797055.0 / 1 938 492**

(71) Applicant: **TELEFONAKTIEBOLAGET LM
ERICSSON (publ)
164 83 Stockholm (SE)**

(72) Inventors:
• **Kazmi, Muhammad
167 39, BROMMA (SE)**
• **Hu, Rong
100016, BEIJING (SE)**

(74) Representative: **Kühn, Friedrich Heinrich
Ericsson AB
Patent Unit LTE
Torshamnsgatan 23
164 80 Stockholm (SE)**

Remarks:
This application was filed on 06-03-2009 as a
divisional application to the application mentioned
under INID code 62.

(54) **Apparatus and Method for Measurement Reporting in a Cellular Telecommunications System**

(57) The signalling overhead in cellular communication systems such as OFDMA is reduced by calculating a report value as a function of each measurement value that is to be reported from a user terminal to the network. The report value is preferably based on a maximum value for the parameter measured, and can be represented by fewer bits than the measurement value. The overhead may be further reduced by selecting only the best measurement values for reporting from the user terminal to the network.

Fig. 3

EP 2 083 529 A2

## Description

## Technical Field

The present invention relates to a user terminal for use in a cellular telecommunications system as defined in the preamble of claim 1, a control node for use in a cellular telecommunications system as defined in the preamble of claim 7, and a method for selecting at least one downlink channel in a cellular telecommunications system as defined in the preamble of claim 12.

## Background and Prior Art

In cellular telecommunications systems it is desirable to use the available bandwidth as efficiently as possible. This includes selecting the best communication channel for each connection. To achieve this, in many systems each user terminal measures parameters indicative of the downlink signalling quality in available channels and reports the values of these parameters to units in the network, such as an access point (base station) or a control node. These parameter values are then used when selecting communication channels.

In an OFDMA based system the available channel bandwidth is sub-divided into several sub-channels, or "chunks". A sub-channel is usually a two-dimensional concept, defined both in time and frequency, that is, a time-frequency resource. A sub-channel is the smallest allocatable part of the frequency bandwidth in the system. Each sub-channel, or chunk, has a bandwidth of approximately 200kHz and in turn comprises of orthogonal sub-carriers. An OFDMA based system typically has 50-100 sub-channels, or chunks, per channel bandwidth per access point (AP).

Each user terminal performs measurements of the downlink channel quality on each channel and reports the measured channel quality to the network. Various types of measurements can be carried out by the terminal, such as channel quality indicator (CQI), received signal strength indicator (RSSI), UE transmit power, signal to interference and noise ratio (SINR). The CQI, RSSI or SINR can be measured by the terminal on pilot symbols or any other suitable measurable signal that can depict the downlink instantaneous (short-term) or long-term channel quality. Based on the reported measurements from the terminals, the network can dynamically allocate the chunks to transmit data to the users in the downlink or to perform other types of radio resource management tasks, such as handover.

The measurements can be reported by the user terminal directly to the access point (AP) or to the centralized controller such as a radio network controller (RNC). Certain measurements, such as CQI and RSSI, are to be reported directly to the AP using in-band signalling for fast scheduling. As mentioned above, in OFDMA systems, each access point can have as many as 100 channels. Also the interleaving time is very short, less than 1ms and the reports must be sent once for each interleaving time to track the instantaneous channel quality. Therefore, the measurement reporting mechanisms currently used would lead to considerable signalling overhead in the uplink.

## Object of the Invention

It is an object of the present invention to reduce the signalling overhead in cellular communication systems.

## Summary of the Invention

This object is achieved according to the present invention by a user terminal for use in a cellular network for communicating with an access point in the cellular network, said user terminal comprising means for performing measurements on downlink channels received from the access point and means for reporting information about the result of these measurements to a node in the cellular network, said user terminal being characterized in that it comprises means for calculating a report value as a function of each measurement value and in that the reporting means is arranged to report the report values instead of the actual measurement values.

The object is also achieved by a control node for use in a cellular network, said node being arranged to control communication in said cellular network, and comprising means for receiving from a user terminal in the network information about measurement values obtained by the user terminal regarding downlink channels between the node and the user terminal, said node comprising means for selecting, in dependence of the information received from the user terminal, at least one channel on which to communicate with the terminal, said node being characterized in that the receiving means is arranged to receive information about each measurement value as a report value that is a function of said measurement value.

The object is also achieved by a method for selecting at least one downlink channel comprising of pilot symbols or another suitable measurable signal sent by an access node in the downlink in the cellular network, comprising the steps of

-　performing measurements in the user terminal regarding downlink channels received from the access node,
-　reporting information about measurement values from the user terminal to a control node in the cellular network,
-　selecting at least one downlink channel in dependence of the reported information, said method being characterized by

calculating a report value as a function of each measurement value and reporting the report value instead of the actual measurement value.

The inventive solution enables the reduction of overhead traffic between the user terminal and the network since the report value can be represented by fewer bits than the measurement value. By reducing the number of bits required to report each measurement value the bandwidth requirement for signalling can be reduced.

In a preferred embodiment the user terminal also comprises memory means for storing a maximum value $\gamma_{max}$ for the measurement, wherein the calculating means is arranged to calculate the report values as a function of the maximum value $\gamma_{max}$. he function used in the method is then a function of the maximum value $\gamma_{max}$.

The user terminal may further comprise means for receiving the value maximum value $\gamma_{max}$ from a control node in the network. In this case the node further comprises means for setting a maximum value $\gamma_{max}$ as a maximum value for a measurement value and means for reporting said maximum value $\gamma_{max}$ to the user terminal.

In a preferred embodiment the user terminal further comprises means for selecting the k best measurement values, *k* being a positive integer, wherein the calculating means is arranged to calculate report values only for the k best measurement values and the reporting means is arranged to report only information about the k best measurement values to the control node.

In this case the method further comprises selecting the k best measurement values and reporting only the k best measurement values to the control node.

This enables a further reduction of the bandwidth needed for signalling, since the number of measurement values, or report values, to be transmitted through the network may be significantly reduced. Of course, this embodiment may be used on its own, that is, the measurement values may be selected and reported without calculating report values first.

The user terminal may further comprise means for identifying any measurement values above a threshold value $\gamma_{min}$ while the calculating means is arranged to calculate report values only for the measurement values above the threshold value $\gamma_{min}$ and the reporting means is arranged to report only measurement values above the threshold value $\gamma_{min}$. In this case, the method further comprises identifying the measurement values that are above a minimum threshold $\gamma_{min}$ and reporting only the measurement values that are above the minimum threshold $\gamma_{min}$

If the values k and $\gamma_{min}$ are received from the network, the user terminal further comprises means for receiving a value for k and/or a value for $\gamma_{min}$ from a node in the network. In this case the node further comprises means for setting a value *k* for the number of measurement values to be reported by the user terminal and/or a minimum threshold value $\gamma_{min}$ determining the lowest measurement value that is to be reported from the user terminal and means for reporting the set value or values to the user terminal, and means for reporting the set value or values to the user terminal.

The reporting means may be arranged to report the set value or values in a broadcast message. Alternatively, the reporting means is arranged to report the set value or values to the user terminal on a dedicated logical channel.

The control node may be the access point or a control node such as an RNC.

According to a second aspect of the invention the object is achieved by a user terminal for use in a cellular network for communicating with an access point in the cellular network, said user terminal comprising means for performing measurements on downlink channels received from the access point and means for reporting measurement values from these measurements to a control node in the cellular network, said user terminal being characterized in that it comprises memory means for storing a positive integer k indicating the maximum number of measurement values to be reported from the user terminal, and

means for selecting the k best measurement values, and in that the reporting means is arranged to report only information about the k best measurement values to the control node.

The memory means is preferably arranged to store a threshold value $\gamma_{min}$, the selecting means is arranged to identify any measurement values below the threshold value $\gamma_{min}$ and the reporting means is arranged to report only measurement values above the threshold value $\gamma_{min}$

The value *k* and/or the threshold value $\gamma_{min}$ may be received from a control node in the network.

According to this second aspect the object is also achieved by a control node for use in a cellular network, said node being arranged to control communication in said cellular network, and comprising means for receiving from a user terminal in the network information about measurement values obtained by the user terminal regarding downlink channels between the network and the user terminal, said node comprising means for selecting, in dependence of the information received from the user terminal, at least one channel on which to communicate with the terminal, said node being characterized in that it comprises means for setting a value *k* for the number of measurement values to be reported by the user terminal and/or a minimum threshold value $\gamma_{min}$ determining the lowest measurement value that is to be reported from the user terminal and means for reporting the set value or values to the user terminal.

The reporting means may be arranged to report the set value or values in a broadcast message or on a dedicated logical channel or another suitable logical channel.

According to the second aspect the invention also relates to a method for selecting at least one downlink channel in a cellular network for signalling between an access node and a user terminal in the cellular network, comprising the steps of

- performing measurements in the user terminal regarding the downlink channels received from the access node,
- reporting information about measurement values from the user terminal to a control node in the cellular network,
- selecting at least one downlink channel in dependence of the reported information, said method being characterized by selecting the k best measurement values and reporting only the k best measurement values to the control node.

The method preferably further comprises identifying the measurement values that are above a minimum threshold $\gamma_{min}$ and reporting only the measurement values that are above the minimum threshold $\gamma_{min}$ Although the discussion above used an OFDMA system as a starting point, the invention can advantageously be applied telecommunications systems using any other access technology in which the sending of information is dependent on feedback from the receiver, including FDMA and TDMA.

**Brief Description of the Drawings**

The present invention will be described in more detail in the following, by way of example, with reference to the appended drawings, in which:

Figure 1 illustrates schematically a cellular network
Figure 2 illustrates a user terminal according to the invention
Figure 3 is a flow chart of a first embodiment of the inventive method
Figure 4 is a flow chart of a second embodiment of the inventive method

**Detailed Description of Embodiments**

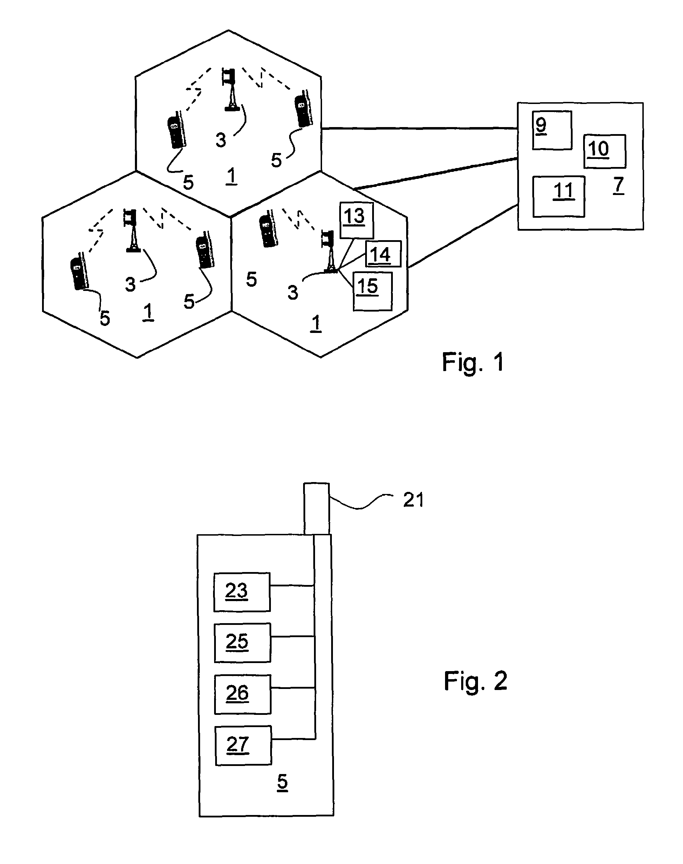

Figure 1 illustrates schematically a cellular network comprising three sites 1, Each site has a base station 3 for communicating with user terminals 5. Usually a site comprises of three sectors but it may also be omni-directional or may have more than three sectors (higher-order sectorization). A central control node 7, such as a Radio Network Controller (RNC) controls the radio resources in the base station and is responsible for the radio resource management tasks such as handovers, admission control, congestion control, etc. Each base station 3 can communicate with the user terminals 5 within its cell on a number of different channels. A control node in the network, that is, either the base station 3 or the central control node 7, or both, decides which channel is to be used for communicating with a particular user terminal 5. These decisions are based on measurement data reported to the base station 3 and/or the control node 7 from each terminal, concerning system parameters measured on downlink channels indicating the quality of each channel. How to do this is well known in the art.

According to a first embodiment of the invention the signalling overhead is reduced by reducing the number of channels for which each terminal reports quality measurement parameters. The control node 7 and/or the access point 3 comprises a parameter setting unit 9, 13, respectively, for setting parameter values for certain system parameters as required, and reporting means 10, 14, respectively, for reporting these parameters to the user terminal 5. The parameters $k$, $\gamma_{min}$ and $\gamma_{max}$ and how to set them will be discussed in detail below. As in conventional systems, the control node 7 and/or the access point 3 also comprises a unit for selecting the downlink channel to use when communicating with a user terminal. This selection is performed based on reports of measurements carried out by the user terminal. The measurement reports are received and handled in a receiving unit 11 in the control node 7 and/or in a receiving unit 15 in the base station 3.

In its simplest form in this embodiment the network, that is, the access point or the control node, defines a digit k indicating the number of channels for which the terminal should report measurements. The terminal selects the k best channels, sorts them in the decreasing order of magnitude and reports the values for these channels to the network. Since the channel to be used for communication is practically always selected among the best channels (for example, the 10 best channels), this reduces the signalling overhead without reducing the overall performance of the cellular network.

The network can also define a measurement threshold $\gamma_{min}$ specifying the lowest acceptable level for each type of measurement. Either all measurement values above the measurement threshold $\gamma_{min}$ may be reported to the network, or the threshold may be combined with the number k of best channels. In the latter case, if the measurements for a number i of the $k$ best channels are below the measurement threshold $\gamma_{min}$ these i channels will also not be reported. In this case, the number of channels for which measurement data must be reported can be reduced even further, *to k - i* in the cases when only a few of the available channels fulfil the minimum requirements for setting up a connection.

The system parameters used in this first embodiment, that is, the number of best channels (k) and the minimum measurement threshold $\gamma_{min}$, are decided by the network and can be based on the amount of data in the buffer, the overall traffic, the quality of service, etc. As an example, for real-time services such as real-time video or speech the traffic condition (buffer status) can be used by the network to predict the average bit rate and the corresponding transport format. This will allow the network to decide the number of chunks required and the minimum quality level ($\gamma_{min}$).

The number of channels for which a terminal is to report may also be based on the number of channels needed by this terminal for a connection. This number of channels may be determined by the network based on the type of service requested and the quality of the channels, which is known to the network. The network can also use measurement data reported by other terminals to determine the quality of the channels; however, these measurements will represent the channels experienced by the terminal that reports them and will not necessarily be representative for the quality experienced by other terminals. The measurements reported by some terminals to determine the channel quality of other terminals that do not report measurements, can be useful in scenarios where terminals are following similar radio conditions (e.g. similar shadowing, fading profile, user speed, etc).

A second embodiment of the embodiment uses differential reporting of measured data. This reduces the signalling overhead by reducing the amount of data that must be reported for each measured parameter. This is especially useful for parameters that have a very large dynamic range, such as RSSI. A large dynamic range means that each parameter value will require a large number of bits, thereby generating a relatively large signalling overhead compared to a parameter having a smaller dynamic range.

According to this second embodiment the maximum possible value $\gamma_{max}$ is determined for each parameter. The actual parameter value is reported as a function of $\gamma_{max}$ or of a previously reported value. As the skilled person will understand, this can be achieved in a large number of ways, some of which will be discussed below.

Let the sub-channels, or chunks, for which parameter values should be reported, be identified as $[\phi_1, \phi_2,...,\phi_k]$. This may include all sub-channels, or the *k or k - i* best sub-channels as selected above. The measured values for these sub-channels are $[\alpha_1,\alpha_2,...,\alpha_k]$. According to the second embodiment the user terminal reports the sub-channel ID and the differential measurements $[\beta_1,\beta_2,...,\beta_k]$ to the access point.

The differential measurements $[\beta_1,\beta2,...,\beta_k]$ may, for example, be determined according to the following:

$$\beta_1=\alpha_1-\gamma_{max}; \ \beta_2=\alpha_1-\alpha_2; \ \beta_k=\alpha_{k-1}-\alpha_k$$

Alternatively, the differential measurements $[\beta_1,\beta2,...,\beta_k]$ may be determined according to the following:

$$\beta_1=\alpha_1-\gamma_{max}; \ \beta_2=\alpha_2-\gamma_{max}; \ \beta_k=\alpha_k-\gamma_{max}$$

In the two examples given above, the function used includes subtraction. The function could also be based on division, for example in the following way:

$$\beta_1=\alpha_1/\gamma_{max}; \ \beta_2=\alpha_1/\alpha_2; \ \beta_k=\alpha_{k-1}/\alpha_k$$

or

$$\beta_1=\alpha_1/\gamma_{max}; \ \beta_2=\alpha_2/\gamma_{max}; \ \beta_k=\alpha_k/\gamma_{max}$$

The important thing is that the function enables the parameter to be reported using fewer bits than by reporting the actual parameter value, and any function that achieves this could be used.

The system parameter used in this embodiment, $\gamma_{max}$, can either be a fixedly standardized value known to the terminal, i.e. a default value, or a variable that can be set by the network.

The first and second embodiments disclosed above may be used individually, as described above, or together. In the latter case, the parameters for the *k,* or *k - i,* best channels are reported in a differential way.

In both the embodiments described above, the system parameters, *k,* $\gamma_{min}$, $\gamma_{max}$ may be stored in the terminal as default values or may be signalled from the network to the terminal. The signalling may be performed in several different ways as will be discussed in the following.

The system parameters could be indicated using any of the following options:

- Reported directly to each user terminal individually on a dedicated logical channel or any other logical channel, through radio resource control (RRC) signalling. In this case different parameters can be set and signalled for each user terminal.
- Broadcasted by the access point in each cell. In this case the same parameters are preferably used for all user terminals in one cell.
- A combination of direct instructions to a user terminal and broadcast could be used. In this case a priority order must be determined for the broadcast data and the individually reported data.
- Default values may be set. If the network does not signal one or more of the above system parameters using any of the above methods the terminal will use the default values.

The reconfiguration of the system parameters will normally be performed when a call is to be set up. It may also be performed during a call, for example if the type of service is to be changed. The broadcast message could also be used to update the parameters of a terminal in idle state. This will in effect mean setting of new default values.

Figure 2 illustrates a user terminal for communicating with an access point in the network according to the invention. The user terminal comprises receiving means and transmitting means, here represented by an antenna 21 for receiving downlink signals from the network. A measuring unit 23 performs measurements on each chunk, or sub-channel, received.

According to the first main embodiment the user terminal also comprises selecting means 25 for selecting the measurement values that are to be reported from the user terminal to the network to reduce the signalling overhead. The selecting means 25 is preferably arranged to select the k best measurement values so that the transmitting means can transmit only the k best measurement values to the network. Alternatively, or in addition, the selecting means 25 may be arranged to identify measurement values that are above a threshold value $\gamma_{min}$ so that measurement values below the threshold value $\gamma_{min}$ will not be reported to the network. The parameters $k$ and $\gamma_{min}$ are stored in a memory means 26.

According to the second main embodiment the user terminal also comprises calculating means 27 for calculating a report value as a function of the measurement value. In this case, the memory means 26 also comprises the maximum value $\gamma_{max}$ as discussed above. The report value is representative of the measurement value but needs fewer bits. In this embodiment the transmitting means 21 will transmit the report value instead of the measurement value, thereby reducing the signalling overhead.

As discussed, the two embodiments can be combined, so that the calculating means 27 only calculates the $k$ best values, or the values above the threshold value $\gamma_{min}$ and the transmitting means 21 will report to the network the report values only for the selected channels, instead of the measurement values for these channels. In this case, the memory unit will comprise all three system parameters, $k, \gamma_{min}$ nd $\gamma_{max}$. Of course, the mobile terminal will comprise other logical units as well. These are well known in the art and are not relevant for the present invention and will therefore not be discussed here.

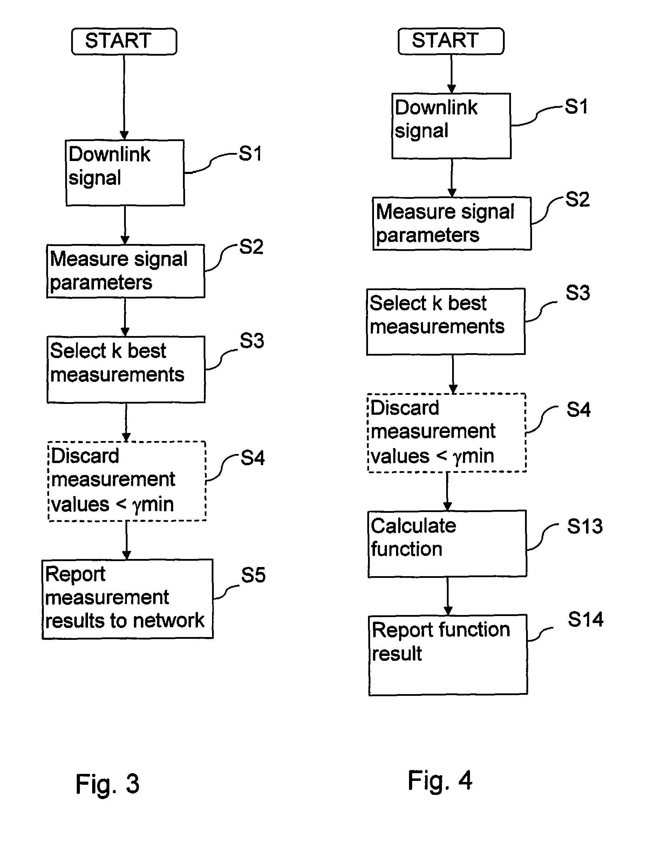

Figure 3 is a flow chart of the first embodiment of the inventive method. In step S 1 the access point (or base station) sends pilot symbols or another suitable measurable signal, on a regular basis, which can be used by the terminal to estimate the downlink short-term or long-term channel quality. The periodicity and the density of the downlink pilot transmission can be set by the network.

In step S2 the mobile terminal performs measurements indicating the downlink channel quality, for example in terms of the CQI, RSSI, transmit power, SINR etc.

In step S3 the mobile terminal selects the best channels, determined by the result of the measurements performed in step S2. As discussed above, the number k of channels to be selected may be determined by a default value stored in the mobile terminal or may, alternatively, be signalled to the mobile terminal the network, e.g. an access point, or from a control node. The signalling may be sent directly to the concerned user terminal by the access point or by the central node, or the signalling can be broadcasted to all the terminals by the access point.

In step S4 the mobile terminal compares the measurement values to a minimum threshold $\gamma_{min}$ and discards the ones that are below the minimum threshold.

Step S3 or step S3 together with step S4 as shown in the flow chart is/are used to reduce the number of measurement values to be reported.

In step S5 the mobile terminal reports the measurement values to the network. If step S3 alone is used to reduce the number of measurement values, the k best values are reported. If steps S3 and S4 are used together the k best values are selected. Then among these k values any values that are below the minimum threshold $\gamma_{min}$ are discarded. In this case if all the k best measurement values are above the minimum threshold $\gamma_{min}$ k values will be reported from the mobile terminal to the network. If a number $i$ of the $k$ best measurement values are below the minimum threshold, *the k - i best values will* be reported.

Thereafter the control node, or the access point in the network, uses the reported measurement data to select one or more channels to use when transmitting signalling or data to the mobile terminal.

Figure 4 is a flow chart of a second embodiment of the inventive method. Steps S1-S4 are identical to the steps described with reference to Fig. 3.

In step S 13 the mobile terminal calculates a function of the measured data. The function may be as described above, or any function may be used as long as the resulting value from the function requires fewer bits than the measured data to be reported to the network.

In step S 14 the mobile terminal reports the resulting value of the function to the network.

Thereafter, the control node, or the access point in the network uses the reported measurement data to select one or more channels to use when signalling to the mobile terminal. This may involve calculations on the reported values to retrieve the original measurement values.

## Claims

1. A user terminal (5) for use in an OFDMA based cellular network for communicating with an access point (3) in the cellular network, said user terminal (5) comprising means (23) for performing measurements on downlink channels received from the access point (3) and means (21) for reporting information about the result of these measurements to a node (3, 7) in the cellular network, said user terminal (5) being **characterized in that** it comprises means (25) for selecting k best channels, k being a positive integer, wherein the reporting means (21) is arranged to report only information about the k best channels to the control node (3, 7).

2. A user terminal according to claim 1, further comprising means for identifying any measurement values above a threshold value $\gamma_{min}$ and the reporting means is arranged to report only measurement values above the threshold value $\gamma_{min}$.

3. A user terminal according to claims 1 or 2, further comprising means (21) for receiving a value for k and/or a value for $\gamma_{min}$ from a node (3, 7) in the network.

4. A user terminal according to claims 1 or 2, further comprising means (26) for storing a value for k and/or a value for $\gamma_{min}$, herein $k$ and/or $\gamma_{min}$ are default values.

5. A user terminal according to any one of the claims 1-4, comprising means for calculating a report value as a function of each measurement value and in that the reporting means (21) is arranged to report the report values instead of the actual measurement values.

6. A user terminal (5) according to claim 5, further comprising memory means (26) for storing a maximum value $\gamma_{max}$ for the measurement, wherein the calculating means (27) is arranged to calculate the report values as a function of the maximum value $\gamma_{max}$

7. A user terminal according to any one of the claims 5-6, further comprising means (21) for receiving the maximum value $\gamma_{max}$ from a control node (3, 7) in the network.

8. A user terminal according to claim 6, further comprising means (26) for storing a value for $\gamma_{max}$, wherein $\gamma_{max}$ is a default value.

9. A control node (3, 7) for use in an OFDMA based cellular network, said node being arranged to control communication in said cellular network, and comprising means (15, 11) for receiving from a user terminal (5) in the network information about measurement values obtained by the user terminal (5) regarding downlink channels between the node (3, 7) and the user terminal (5), said node comprising means for selecting, in dependence of the information received from the user terminal, at least one channel on which to communicate with the terminal, said node being **characterized in** means (9, 13) for setting a value $k$ indicating the number of measurement values to be reported by the user terminal and means (10, 14) for reporting the set value to the user terminal (5).

10. A node according to claim 9, further comprising means (9, 13) for setting a minimum threshold value $\gamma_{min}$ determining the lowest measurement value that is to be reported from the user terminal.

11. A node according to claim 9 or 10, wherein the reporting means (10, 14) is arranged to report the set value or values in a broadcast message.

12. A node according to any one of the claims 9-11, wherein the reporting means (10, 14) is arranged to report the set value or values to the user terminal on a dedicated logical channel.

13. A node according to any of claim 9-12, wherein the receiving means (11, 15) is arranged to receive information about each measurement value as a report value that is a function of said measurement value.

14. A node according to claim 13, further comprising means (9, 13) for setting a maximum value $\gamma_{max}$ as a maximum value for a measurement value and means (10, 14) for reporting said maximum value $\gamma_{max}$ to the user terminal.

15. A method in a user terminal (5) in communication with an access point in an OFDM based cellular network for reporting of measurements, **characterized in** the steps of

   - performing measurements regarding downlink channels received from an access node (3);
   - selecting the k best channels, k being a positive integer;
   - reporting information about results of measurements only for the k best channels to a node in the network.

16. A method according to claim 15, further comprising identifying the measurement values that are above a minimum threshold $\gamma_{min}$ and reporting only the measurement values that are above the minimum threshold $\gamma_{min}$.

17. A method according to one of claims 15-16, further comprising the step of receiving the value of $k$ and/or the minimum value $\gamma_{min}$ from a control node (3, 7) in the network.

18. A method according to one of claims 15-16, whereby the value of $k$ and/or the minimum value $\gamma_{min}$ are default values.

19. A method according to any of claims 15-18, comprising the step of calculating a report value as a function of each measurement value and reporting the report value instead of the actual measurement value.

**20.** A method according to claim 16, wherein the function is a function of a maximum value $\gamma_{max}$ for the measurement.

**21.** A method according to claim 20, comprising the step of receiving the maximum value $\gamma_{max}$ from a control node in the network.

**22.** A method according to claim 20, wherein the value for the maximum value $\gamma_{max}$ is a default value.

**23.** A method in a control node (3, 7) in an OFDMA based cellular network for selecting at least one downlink channel, said node being arranged to control communication in said cellular network, **characterized in** the steps of

- setting a value $k$ indicating the number of measurement values to be reported by the user terminal;
- reporting the set value to the user terminal (5);
- receiving from a user terminal (5) in the network information about measurement values obtained by the user terminal (5) for the k best channels selected by the user terminal,
- selecting, in dependence of the information received from the user terminal, at least one channel on which to communicate with the terminal.

**24.** A method according to claim 23, further comprising the step of setting a minimum threshold value $\gamma_{min}$ determining the lowest measurement value that is to be reported from the user terminal.

**25.** A method according to claim 23 or 24 whereby the set value or values is/are reported in a broadcast message.

**26.** A method according to any one of the claims 23-24, wherein the set value or values is /are reported to the user terminal on a dedicated logical channel.

**27.** A method according to any of claim 23-26, whereby information about each measurement value is received as a report value that is a function of said measurement value.

**28.** A method according to claim 27, comprising the steps of setting a maximum value $\gamma_{max}$ as a maximum value for a measurement value and reporting said maximum value $\gamma_{max}$ to the user terminal.

**29.** A method according to claim 28, wherein the function is a function of a maximum value $\gamma_{max}$ for the measurement.

Fig. 1

Fig. 2

Fig. 3

Fig. 4